# EUROPEAN PATENT SPECIFICATION

(11) **EP 4 425 155 B1**
(45) Date of publication and mention of the grant of the patent: **09.12.2026**
(21) Application number: 22886518.4
(22) Date of filing: 16.09.2022
(51) Int. Cl.: G06T 7/00, G01N 21/88, G06T 19/20

(54) **ANNOTATION ASSISTANCE SYSTEM AND TRAINING ASSISTANCE SYSTEM THAT IS FOR MODEL FOR INSPECTING APPEARANCE AND THAT USES SAID ANNOTATION ASSISTANCE SYSTEM**
ANNOTATIONSUNTERSTÜTZUNGSSYSTEM UND TRAININGSUNTERSTÜTZUNGSSYSTEM FÜR EIN MODELL ZUR INSPEKTION DES AUSSEHENS UND DAS DIESES ANNOTATIONSUNTERSTÜTZUNGSSYSTEM VERWENDET
SYSTÈME D'AIDE À L'ANNOTATION ET SYSTÈME D'AIDE À L'APPRENTISSAGE QUI EST DESTINÉ À UN MODÈLE D'INSPECTION D'APPARENCE ET QUI UTILISE LEDIT SYSTÈME D'AIDE À L'ANNOTATION

(30) Priority: 28.10.2021 JP 2021176336
(43) Date of publication of application: 04.09.2024
(73) Proprietor: Panasonic Intellectual Property Management Co., Ltd., Osaka-shi, Osaka 540-6207 (JP)
(72) Inventor: EGUCHI Haruki, Kadoma-shi, Osaka 571-0057 (JP); YOSHIDA Masashi, Kadoma-shi, Osaka 571-0057 (JP); NISHIMOTO Tomotaka, Kadoma-shi, Osaka 571-0057 (JP)
(74) Representative: Novagraaf International SA
(86) International application number: PCT/JP2022/034803
(87) International publication number: WO 2023/074184

(56) References cited:
- EP-A1- 3 900 870
- WO-A1-2020/129617
- CN-A- 111 666 955
- JP-A- 2008 032 645
- JP-A- 2012 108 701
- JP-A- 2019 087 229
- JP-A- 2020 102 111
- JP-A- 2020 125 980
- JP-A- 2020 191 063

## Description

### TECHNICAL FIELD

The present disclosure relates to an annotation support system for image data used for weld appearance inspection and a learning support system for an appearance inspection model using the annotation support system.

### BACKGROUND ART

An apparatus for appearance inspection of an object or a machined part of an object has been disclosed. The apparatus inspects the appearance of an inspection target from an image of the inspection target based on feature values obtained by machine learning using learning images or an appearance inspection model (see, e.g., Patent Documents 1 to 4).

Patent Documents 5 and 6 disclose examples of the machine learning using a learning image and learning data obtained by data augmentation of the learning image to obtain the feature values or the appearance inspection model.

### CITATION LIST

### PATENT DOCUMENT

Patent Document 1: Japanese Unexamined Patent Publication No. 2020-030695
Patent Document 2: Japanese Unexamined Patent Publication No. 2020-042669
Patent Document 3: Japanese Unexamined Patent Publication No. 2020-042755
Patent Document 4: Japanese Unexamined Patent Publication No. 2020-115311
Patent Document 5: PCT International Publication No. WO 2020/129617
Patent Document 6: PCT International Publication No. WO 2020/129618
The document EP 3900870 discloses an appearance inspection apparatus 20 including: an image processor 23 that generates image data of a weld 201 based on data of a shape measured by a shape measurement unit 21; a learning data set generator 25 that classifies the multiple pieces of image data generated by the image processor 23 by material and shape of the workpiece 200, and performs data extension processing to generate a plurality of learning data sets; a determination model generator 26 that generates a determination model for the shape of the weld 201 for each of the material and shape of the workpiece 200 using the plurality of learning data sets; and a first determination unit 27 that determines whether the shape of the weld 201 is good or bad based on the image data read from the image processor 23 and the determination model.

### SUMMARY OF THE INVENTION

### TECHNICAL PROBLEM

Many pieces of appearance inspection software each incorporating an appearance inspection model enhanced by machine learning (hereinafter, simply referred to as appearance inspection software) are publicly available. For example, even an operator having no special knowledge about artificial intelligence (hereinafter, simply referred to as AI) or machine learning can use such software.

For a determination of whether a poor weld is present using the appearance inspection software, image data of a weld with the position, size, and type of the poor weld identified in advance (which may be hereinafter sometimes referred to as teaching data) is required for the machine learning. When generating the teaching data, a skilled welder needs to visually check the image data of the weld, identify the position, size, and type of the poor weld, and add the identified information to the image data.

In welding, the size of the weld or the poor weld is often as small as ten-odd mm or less. Further, many of the poor welds have irregularities. Such a visual analysis of three-dimensional image data of minute portions is a burden on the welder. For higher accuracy of the machine learning, it is necessary to generate a certain amount or more of teaching data. If the welder generates all the data by himself or herself, the number of steps increases, and a mental load on the welder also increases.

It is difficult for the current appearance inspection software to handle three-dimensional data, and some modification is required in many cases. If the data preprocessing function and the machine learning function for the machine learning are implemented by different pieces of software, each of the pieces of software requires modification to handle the three-dimensional image, and the modification takes a long time.

However, it is inefficient for the operator with little knowledge about AI and machine learning to perform these operations alone, taking a long time.

In view of the foregoing, an object of the present disclosure is to provide an annotation support system that allows a welder, particularly a welder with little knowledge about AI and machine learning, to easily add an annotation to a weld in image data, and a learning support system for an appearance inspection model using the annotation support system.

### SOLUTION TO THE PROBLEM

To achieve the object, the present disclosure provides an annotation support system for image data used for appearance inspection of a weld. The annotation support system at least includes: an annotator that adds an annotation to the image data; a display/input unit that visualizes and displays a process performed by the annotator; and a storage that stores the image data having the annotation added by the annotator. The annotator adds the annotation to the image data by locating a poor weld in the image data and labelling the poor weld with a type of the poor weld.

A learning support system for an appearance inspection model of the present disclosure is a learning support system for a weld appearance inspection model. The learning support system includes at least: a data acquisition unit that acquires image data of the weld; the above-described annotation support system; a storage that stores at least multiple pieces of learning data generated based on the image data having the annotation added by the annotation support system and the appearance inspection model; a data divider that divides each of the multiple pieces of learning data into pieces of learning data of a predetermined size; the storage that stores the divided pieces of learning data and the appearance inspection model; a learning unit that performs machine learning on the appearance inspection model read from the storage based on the multiple pieces of learning data divided by the data divider and the image data acquired from the data acquisition unit and divided into pieces of image data of the predetermined size by the data divider to generate a plurality of learned models; and an evaluation unit that evaluates the plurality of learned models in accordance with a predetermined evaluation criterion to select the learned model having the best result among the learned models.

### ADVANTAGES OF THE INVENTION

The present disclosure allows a welder with little knowledge of AI and machine learning to easily add an annotation to a weld in image data. The present disclosure also allows the welder to easily generate and update an appearance inspection model.

### BRIEF DESCRIPTION OF THE DRAWINGS

FIG. 1 is a schematic configuration diagram of a learning support system for an appearance inspection model according to a first embodiment.
FIG. 2 is a schematic configuration diagram of an annotation support system.
FIG. 3 is a flowchart of a process of adding an annotation.
FIG. 4A is a schematic sectional view illustrating an example of a poor weld.
FIG. 4B is a schematic sectional view illustrating another example of the poor weld.
FIG. 4C is a schematic sectional view illustrating another example of the poor weld.
FIG. 4D is a schematic plan view illustrating another example of the poor weld.
FIG. 5A is a view illustrating a display example of an image of a weld.
FIG. 5B is a view illustrating another display example of the image of the weld.
FIG. 6 is a view illustrating an example of the weld displayed rotated.
FIG. 7A is a view illustrating an example of an annotation added on a display/input unit.
FIG. 7B is a view illustrating another example of the annotation added on the display/input unit.
FIG. 8 is a view illustrating an example of labeling of a poor weld of a different type.
FIG. 9 is a flowchart of a process of adding an annotation according to a second embodiment.
FIG. 10A is a schematic view illustrating an example of a data augmentation process.
FIG. 10B is a schematic view illustrating another example of the data augmentation process.
FIG. 11A is a schematic view illustrating an example of a process of dividing an image data.
FIG. 11B is a schematic view illustrating another example of the process of dividing the image data.
FIG. 12 is a schematic view illustrating an example of a process of image data interpolation.
FIG. 13A is a schematic view illustrating an example of a process of correcting an annotation.
FIG. 13B is a schematic view illustrating an example of the process of correcting the annotation.
FIG. 14 is a flowchart of a process of updating an inspection model.

### DESCRIPTION OF EMBODIMENTS

Embodiments of the present disclosure will be described in detail below with reference to the drawings. The following description of advantageous embodiments is a mere example in nature, and is not at all intended to limit the scope, applications or use of the present invention. The scope of the present invention and its embodiments is defined by the appended claims.

### (First Embodiment)

### [Learning Support System for Appearance Inspection Model]

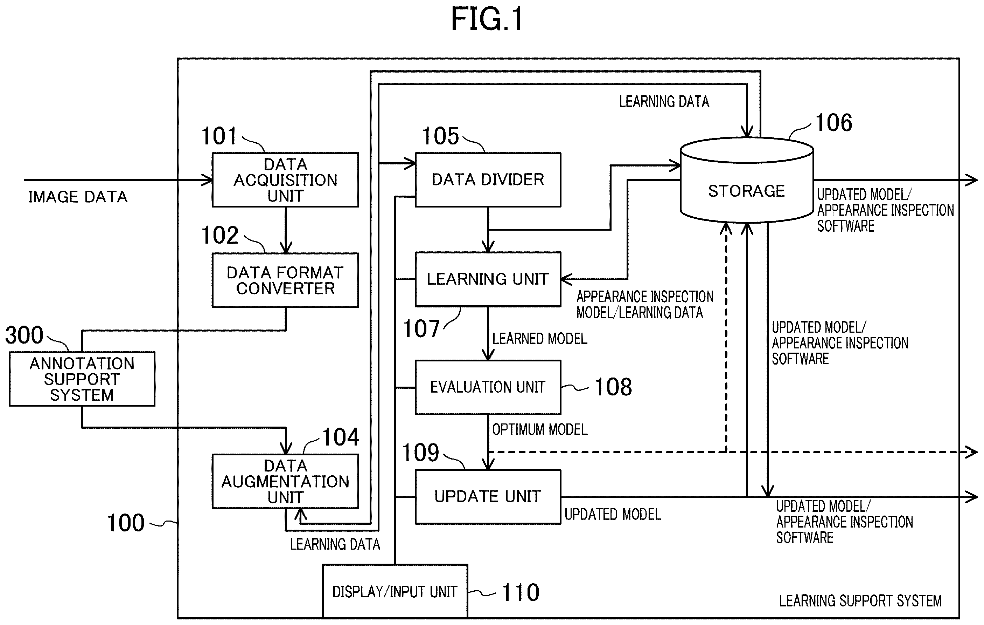

FIG. 1 is a schematic configuration diagram of a learning support system for an appearance inspection model. A learning support system 100 has a plurality of functional blocks and includes a known computer as a component. When software implemented on a central processing unit (CPU) or a graphics processing unit (GPU) included in the computer runs, the functional blocks in the learning support system 100 are configured, and each functional block operates.

The learning support system 100 includes a data acquisition unit 101, a data format converter 102, a data augmentation unit 104, and a data divider 105 as the functional blocks. The learning support system 100 further includes a learning unit 107, an evaluation unit 108, and an update unit 109 as the functional blocks. The learning support system 100 further includes a storage 106 and a display/input unit 110 as the functional blocks.

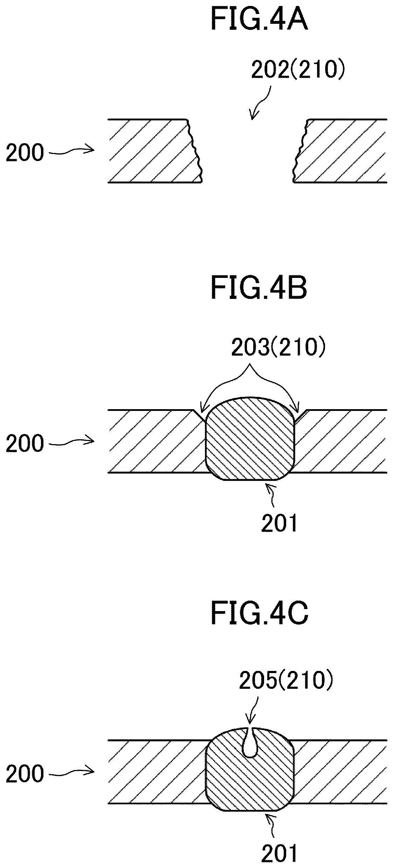

The data acquisition unit 101 acquires image data of a weld 201 (see, e.g., FIGS. 4A to 4D) from outside, for example, from an appearance inspection apparatus which is not shown. The image data is point group data obtained by three-dimensionally capturing the shapes of the weld 201 and the surrounding region, that is, data in three-dimensional space.

The data format converter 102 converts the image data acquired by the data acquisition unit 101 into a format that can be handled by the learning unit 107. If the image data acquired by the data acquisition unit 101 is already in a format that can be handled by the learning unit 107, the data format converter 102 can be omitted.

The data augmentation unit 104 performs a data augmentation process based on image data with an annotation added by an annotation support system 300, which will be described in detail later, and generates multiple pieces of learning data. In the present specification, the "addition of annotation" refers to adding information of whether a poor weld 210 (see FIGS. 4A to 4D) is present to the image data, identifying the position and size of the poor weld 210 on the image data, and labeling the poor weld 210 with the type of the poor weld (e.g., a pit, smut, a hole, an undercut, or a spatter).

The data augmentation process may be performed outside the learning support system 100. In this case, the data augmentation unit 104 is implemented in another software outside the learning support system 100, and multiple pieces of learning data generated after the data augmentation process are stored in the storage 106 via wired or wireless communication.

The data divider 105 divides each of the multiple pieces of learning data read from the storage 106 into pieces of learning data of a size predetermined for the machine learning in the learning unit 107. The data divider 105 also divides the image data that is acquired by the data acquisition unit 101 and has the annotation added by the annotation support system 300 into pieces of image data of a size predetermined for the machine learning in the learning unit 107.

The storage 106 is constituted of a semiconductor memory such as RAM, an SSD, or a hard disk. The storage 106 may be built on a server.

The storage 106 stores at least one or more appearance inspection models generated in advance and the pieces of learning data generated by the data augmentation unit 104. Although not shown, the storage 106 also stores the pieces of learning data divided by the data divider 105. The storage 106 also stores the learning data generated in the past.

The appearance inspection model is a combination of classifiers each of which is weighted, and is a known object detection algorithm. The appearance inspection model is represented by, for example, convolutional neural network (CNN), you only look once (YOLO), or Faster-R CNN (Regions with Convolutional Neural Networks).

The appearance inspection model in the present specification is a file that describes a numerical value group necessary for determining the presence and type of the poor weld, and is also called a weight file. The appearance inspection model (weight file) is generated by the learning support system 100 based on the above-described teaching data. The appearance inspection model is incorporated in an appearance inspection apparatus which is not shown, and used for appearance inspection of the weld 201. If there is an error in the result of the appearance inspection of the weld 201, the learning support system 100 performs the machine learning again to update the appearance inspection model.

The learning unit 107 includes one or more GPUs. The learning unit 107 performs machine learning on the appearance inspection model based on the multiple pieces of learning data divided by the data divider 105 and newly entered image data to generate a plurality of learned models. Specifically, a known inference engine, such as YOLO which is one of the object detection algorithms, is implemented in the learning unit 107. The appearance inspection model (weight file) called from the storage 106 is set in the learning unit 107. The divided pieces of learning data and image data are inputted to the learning unit 107, and the machine learning is performed on the inference engine. For example, every time the number of repetitions of the learning reaches a predetermined number, the learning unit 107 generates the learned model (weight file), and the generated learned model is stored in the storage 106 each time. The series of processes are repeated until the number of repetitions reaches a certain value. Note that another inference engine may be implemented in the learning unit 107.

The evaluation unit 108 evaluates the learned models generated by the learning unit 107 in accordance with a predetermined evaluation criterion, and selects the learned model having the best result among the learned models. In the present embodiment, the evaluation criterion is set based on the following concept.

Whether the learned model is good or not is determined from the detection result obtained by inputting the teaching data to the learned model and the actual evaluation result of the teaching data, i.e., the result of correlation with the result of annotation added to the image data by the welder. If the detection result of the learned model and the actual evaluation result of the teaching data match, the learned model is evaluated to be good. If the detection result of the learned model and the actual evaluation result of the teaching data do not match, the learned model is evaluated to be a model that causes erroneous detection, that is, a defective model.

In the present specification, the "welder" includes not only a person who actually performs the welding work but also a manager of the welding work and a manager of an appearance inspection apparatus (not shown) and a welding apparatus.

One of the problems of the inspection of the weld 201 in particular is that a poor weld is found in the actual evaluation result of the teaching data although no poor weld was found in the detection result of the learned model. This is because of missed detection of the poor weld in the appearance inspection using the appearance inspection model. In order to avoid the missed detection, the detection rate is used as the evaluation value. The "detection rate" refers to a degree of overlap between the actual evaluation result of the teaching data and the detection result obtained by inputting the teaching data to the learned model. In other words, the detection rate used as the evaluation value refers to the degree of coincidence of the actual evaluation result with the detection result obtained by inputting the image data to the learned model. The higher the detection rate, the better the evaluated learned model.

That is, the evaluation unit 108 selects the learned model (weight file) having the highest detection rate as the appearance inspection model among the learned models (weight files) generated by the learning unit 107.

The update unit 109 updates the appearance inspection model to the learned model selected by the evaluation unit 108, and stores the updated appearance inspection model in the storage 106. The updated appearance inspection model is given a file name different from that of the original appearance inspection model and is stored in the storage 106. The update unit 109 may also function as an output unit that outputs the learned model selected by the evaluation unit 108 as the appearance inspection model to the outside of the learning support system 100. Alternatively, the update unit may function as an output unit that outputs, not only the appearance inspection model, but also the appearance inspection software updated by incorporating the appearance inspection model, to the outside of the learning support system 100. In this case, the appearance inspection software before the update is stored in the storage 106 in advance. The function of the update unit 109 may be incorporated in the evaluation unit 108.

It is preferable that one learned model and a data group used for generating the learned model are associated with each other and stored in the storage 106 as one sequence data group. The data group includes the learning data used for the learning and a data file describing a data division process and a data file describing the evaluation method. The sequence data group includes log data at the generation and update of the appearance inspection model. The sequence data group also includes, for example, all conditions at the generation and update processes and commands inputted at the time of each process. The sequence data group further includes data files describing the learning results and the evaluation results.

One sequence data group is stored and managed as one sequence folder. Thus, when the learning support system 100 is activated to update the appearance inspection model, a desired sequence folder is selected on the display/input unit 110 and displayed on the screen for use as it is or after being changed. For data management, each sequence folder is given a name or a number.

The data in the sequence folder is stored as text data. Thus, the welder using the learning support system 100 can directly check the data in the sequence folder, for example, all the conditions described above, as necessary.

The display/input unit 110 is comprised of, for example, a touch panel display with a color screen. A touch pen may be added as an input device. The display/input unit 110 may be comprised of a known liquid crystal display or organic EL display and devices for the input to the learning support system 100, for example, a mouse and a keyboard.

The display/input unit 110 is configured to display data used for the evaluation of the appearance inspection model and the status of the update of the appearance inspection model and to allow a user to select a sequence data group including the data on the screen.

Further, the display/input unit 110 functions as an input unit for inputting an execution command to execute at least the data division, the learning, and the evaluation. The display/input unit 110 may be an input unit for inputting an execution command to execute the update of the appearance inspection model.

The display/input unit 110 also functions as a display unit for displaying at least the file names of data file groups used for the execution of the data division, the learning, and the evaluation. The display/input unit 110 may be a display unit for displaying the file names of the data file groups used for the update of the appearance inspection model.

### [Configuration of Annotation Support System]

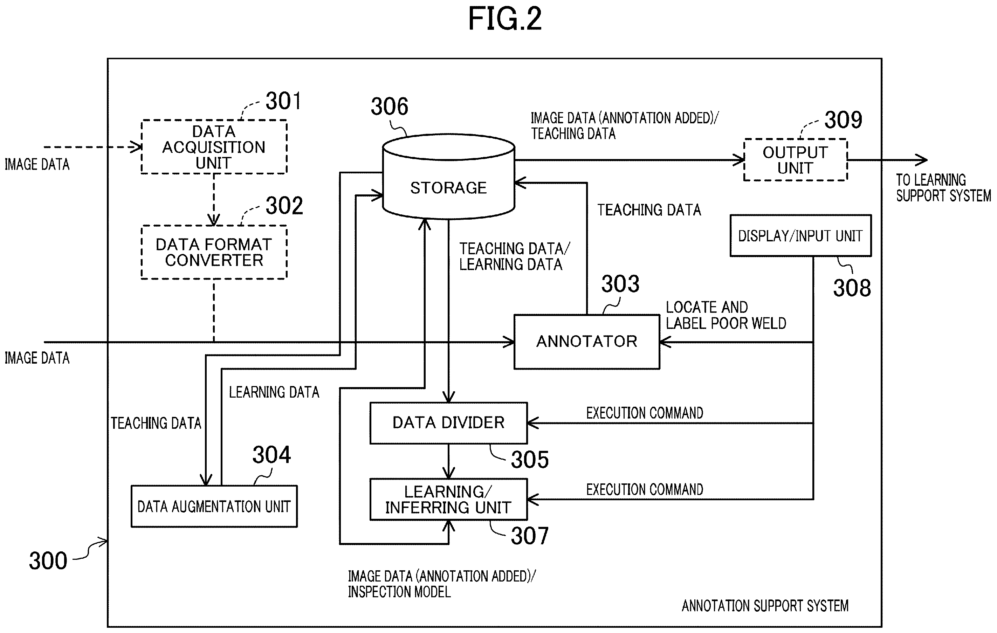

FIG. 2 is a schematic configuration diagram of the annotation support system. The annotation support system 300 has a plurality of functional blocks and includes a known computer as a component. When software implemented on a CPU or a GPU included in the computer runs, the functional blocks in the annotation support system 300 are configured, and each functional block operates.

The annotation support system 300 includes a data acquisition unit 301, a data format converter 302, and an annotator 303 as the functional blocks. The annotation support system 300 also includes a data augmentation unit 304, a data divider 305, a storage 306, and a learning/inferring unit 307 as the functional blocks. The annotation support system 300 further includes a display/input unit 308 and an output unit 309 as the functional blocks. Note that, as will be described later, the output unit 309 can be omitted.

The data acquisition unit 301 and the data format converter 302 have the same functions as the data acquisition unit 101 and the data format converter 102 shown in FIG. 1. Specifically, the data acquisition unit 301 acquires image data of the weld 201 from outside. The data format converter 302 converts the image data acquired by the data acquisition unit 301 into a format that can be handled by the learning/inferring unit 307. As described above, the data format converter 302 may be omitted.

The annotator 303 adds an annotation to the image data. Specifically, information on the position, size, and type of the poor weld 210 identified on the image data is added to the image data. The identification of the position and size of the poor weld 210 in the image data and the labeling of the poor weld with the type of the poor weld are performed by a skilled welder via the display/input unit 308. The process of adding the annotation will be described in detail later.

The data augmentation unit 304, the data divider 305, and the storage 306 have the same functions as the data augmentation unit 104, the data divider 105, and the storage 106 shown in FIG. 1.

The data augmentation unit 304 performs a data augmentation process based on the image data with the annotation added by the annotator 303, that is, the teaching data, to generate multiple pieces of learning data. The data divider 305 divides the teaching data and the multiple pieces of learning data read from the storage 306 by a size predetermined for the machine learning in the learning/inferring unit 307.

The storage 306 is comprised of a semiconductor memory such as RAM or an SSD, or a hard disk, just like the storage 106 shown in FIG. 1.

The storage 306 stores at least one or more pieces of teaching data generated in advance and the learning data generated by the data augmentation unit 304. Although not shown, the storage 306 also stores the pieces of learning data divided by the data divider 305. The storage 306 also stores the learning data generated in the past. The storage 306 stores one or more inspection models described later. The "inspection model" of the present specification is a model used for semi-automatic addition of the annotation, which will be described later, and will be referred to in distinction from the above-described appearance inspection model. Note that the inspection model is also a known object detection algorithm as is the appearance inspection model. That is, the inspection model is a combination of classifiers each of which is weighted, and is represented by, for example, CNN, YOLO, or Faster R-CNN. The inspection model is a weight file describing a group of numerical values required for determining the position, size, and type of the poor weld 210 included in the image data when adding the annotation. The inspection model (weight file) is generated or updated by the annotation support system 300 based on the teaching data generated in advance.

The learning/inferring unit 307 is comprised of one or more GPUs, just like the learning unit 107 shown in FIG. 1. The learning/inferring unit 307 performs machine learning on the inspection model based on the pieces of the learning data and teaching data divided by the data divider 305 to generate a plurality of learned models. For example, YOLO, which is one of the object detection algorithms described above, is implemented in the learning/inferring unit 307. The inspection model (weight file) called from the storage 306 is set in the learning/inferring unit 307. The divided pieces of learning data and teaching data are inputted to the learning/inferring unit 307 for the machine learning on the inference engine. For example, the learning/inferring unit 307 generates the learned model every time the number of repetitions of the learning reaches a predetermined number, and the storage 306 stores the generated learned model each time the learned model is generated. The series of processes are repeated until the number of repetitions reaches a certain value. Note that another inference engine may be implemented in the learning/inferring unit 307.

The learning/inferring unit 307 evaluates the generated learned models in accordance with a predetermined evaluation criterion, and selects the learned model having the best result among the learned models as the inspection model. The evaluation criterion in this case is the detection rate as described above. As will be described later, the learning/inferring unit 307 updates the inspection model to the learned model having the best result and stores the learned model in the storage 306.

The learning/inferring unit 307 has the same function as the annotator 303 when the annotation is semi-automatically added to the image data. Specifically, newly acquired image data is inputted to the inspection model, and the annotation is added based on the divided pieces of learning data and teaching data read from the storage 306. The image data with the annotation semi-automatically added is stored in the storage 306 after the validity of the added annotation is evaluated. The evaluation will be described in detail later.

The display/input unit 308 has the same configuration as the display/input unit 110 shown in FIG. 1, and is comprised of, for example, a touch panel display with a color screen or a known liquid crystal display or organic EL display, a mouse, and a keyboard.

When adding the annotation to the weld 201, the display/input unit 308 has the function of displaying the annotation result by surrounding the poor weld 210 with a frame or by painting the inside of the frame with a color corresponding to the type of the poor weld. Further, the display/input unit 308 allows the user to select whether to display the image data as the point group data in the three-dimensional space or to smooth the image data for display in the three-dimensional space.

That is, the display/input unit 308 functions as a display unit that visualizes and displays the process performed by the annotator 303. The display/input unit 308 also functions as an input unit for adding the annotation to the weld 201. The display/input unit 308 further functions as an input unit for inputting an execution command to the data augmentation unit 304, the data divider 305, and the learning/inferring unit 307.

The display/input unit 308 further functions as a display unit for displaying at least the file names of the data file group used for the execution of the data division, the learning, or the evaluation.
The output unit 309 outputs the teaching data stored in the storage 306 and the image data with the annotation added to the outside of the annotation support system 300, for example, the learning support system 100. Note that the output unit 309 may not be provided inside the annotation support system 300 if the learning support system 100 can directly access the storage 306.

Note that the learning support system 100 shown in FIG. 1 and the annotation support system 300 shown in FIG. 2 include some functional blocks having partially or entirely the same or similar functions. As described above, the data acquisition unit 101 shown in FIG. 1 and the data acquisition unit 301 shown in FIG. 2 have the same function. Likewise, the data format converter 102 and the data format converter 302 have the same function. The data augmentation unit 104 and the data augmentation unit 304 have the same function. The data divider 105 and the data divider 305 have the same function.

The storage 106 and the storage 306 have the same function. The learning unit 107 and the learning/inferring unit 307 have the same machine learning function. The display/input unit 110 and the display/input unit 308 have the same functions of inputting a process command and displaying the process result.

Thus, the learning support system 100 and the annotation support system 300 may be implemented on the same computer. Alternatively, the functional blocks of the learning support system 100 and the functional blocks of the annotation support system 300 having the same or similar functions may be implemented on the same computer. In these cases, part of hardware constituting the computer, for example, the storage 106 or the storage 306, may be built on the same server or different servers.

### [Process of Adding Annotation]

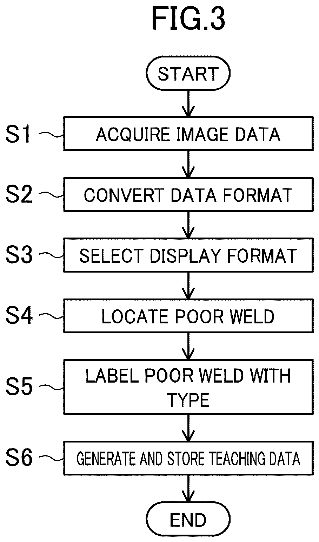

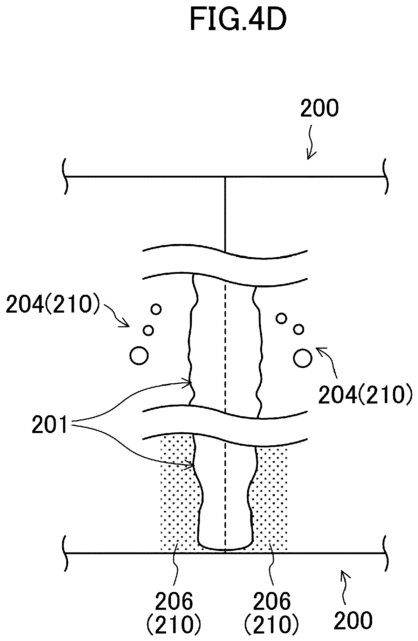

FIG. 3 is a flowchart of a process of adding an annotation. FIG. 4A is a schematic sectional view showing an example of the poor weld, FIG. 4B is a schematic sectional view showing another example of the poor weld, and FIG. 4C is a schematic sectional view showing another example of the poor weld. FIG. 4D is a schematic plan view showing another example of the poor weld.

In the present embodiment, it will be described an example in which the welder directly adds the annotation to the image data via the display/input unit 308. Before the description of a specific annotation process, the types of the poor weld will be described first.

When arc welding or laser welding is performed on a workpiece 200, various shape defects may occur on the weld 201 which is a welded part due to a failure of welding condition setting or poor quality of the workpiece 200. In the present embodiment, the weld 201 is an elongated weld bead extending along the welding direction (see, e.g., FIG. 4D), but the weld 201 is not particularly limited to the elongated weld bead, and may be a spot-shaped weld bead. The weld 201 may be a weld bead having a curved or bent shape.

For example, part of the weld 201 may melt off (hereinafter, a through hole formed in the workpiece 200 by the partial melting of the weld 201 off the workpiece 200 may be referred to as a hole 202) as shown in FIG. 4A, or undercuts 203 may be generated as shown in FIG. 4B. The undercut 203 is a defective portion where the edge of the weld bead is recessed from the surface of the workpiece 200. When the workpiece 200 is a sheet of galvanized steel, part of the sheet may evaporate from the weld 201 to form a pit 205 as shown in FIG. 4C. Further, as shown in FIG. 4D, spatter 204 may be generated when some of droplets (not shown) moving from the tip of a weld wire (not shown) to the workpiece 200 or fine particles of molten metal of the workpiece 200 splatter on the workpiece 200, or smut 206 may be generated near the weld 201 when the workpiece 200 is made of an aluminum-based material.

The pit 205 is open on the surface of the weld bead, and the smut 206 is a black sootlike deposit generated near the weld bead. The pit 205 and the smut 206, and the hole 202, the undercut 203, and the spatter 204 as well, are the types of the poor weld 210. The poor weld 210, or a weld defect, includes various types of shape defects.

The process of adding the annotation will be specifically described below.

For the addition of the annotation to the image data of the weld 201, first, the image data is acquired from the data acquisition unit 301 (Step S1). The data format converter 302 converts the image data into a format that is available for a learning process which will be described later (Step S2). If the image data obtained in Step S1 is already in a format available for the learning process, Step S2 is skipped. Step S2 can be skipped when the annotation is not semi-automatically added.

Then, the image data is displayed on the display/input unit 308. At this time, the display format of the image data is selected and changed as required (Step S3).

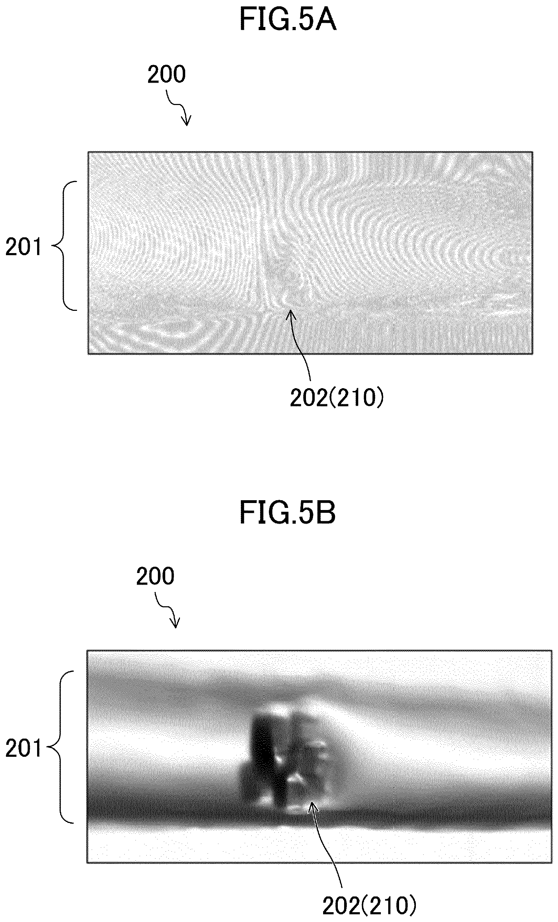

FIG. 5A shows a display example of the image of the weld, and FIG. 5B shows another display example of the image of the weld. In FIGS. 5A and 5B, the poor weld is the hole 202.

As described above, the image data is the point group data in the three-dimensional space. For two-dimensional display of the image data, for example, the height from the reference plane of the workpiece 200 may be assigned to each pixel as a data value, and the difference between the data values may be displayed in gray scale as shown in FIG. 5A. However, in this case, it may be difficult for the welder to visually recognize the presence, position, and size of the poor weld 210.

Thus, the annotation support system 300 of the present embodiment can change the display format of the image data so that the welder can easily visually recognize the weld 201 and the poor weld 210. For example, as shown in FIG. 5B, the image data may be smoothed and the smoothed image may be displayed on the display/input unit 308. This allows the welder to visually recognize the weld 201 three-dimensionally and to easily check whether the poor weld 210 is present and identify the type of the poor weld 210.

For better visibility for the welder, the annotation support system 300 of the present embodiment can display the image data rotated about a predetermined axis on the display/input unit 308. Specifically, the image data can be rotated about two axes orthogonal to each other on the display screen of the display/input unit 308. Further, the image data can be rotated about an axis orthogonal to the display screen of the display/input unit 308.

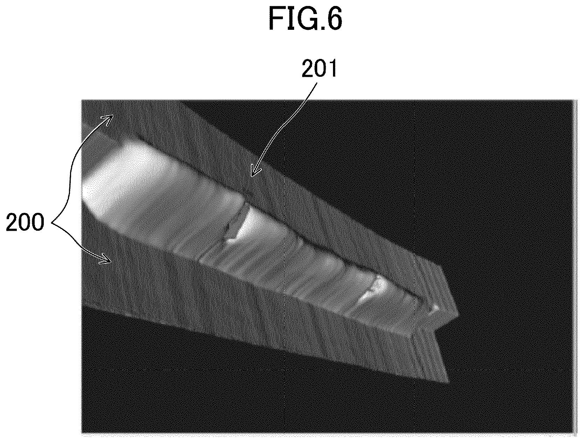

FIG. 6 shows an example of the weld displayed rotated. The workpiece 200 shown in FIG. 6 includes two plates partially overlapping with each other. The weld 201 is formed near an end surface of the plate stacked on the other. In the example shown in FIG. 6, the weld 201 is displayed rotated by a predetermined angle about an axis along the extending direction of the weld 201.

It may be difficult for the welder to recognize the poor weld 210 appropriately visually when the workpiece 200 having such a structure is displayed as viewed from a direction orthogonal to the surface of the workpiece 200. Thus, when the image data including the weld 201 is displayed rotated on the display/input unit 308 as shown in FIG. 6, whether the poor weld 210 is present can be easily checked, and the type of the poor weld 210 can be easily identified.

Apart from this, the annotation support system 300 of the present embodiment can display the image data partially enlarged or reduced on the display/input unit 308. When the image data is displayed rotated, the image data can be partially enlarged or reduced. This improves the visibility for the welder, allowing the welder to check whether the poor weld 210 is present and to identify the type of the poor weld 210 more easily.

Next, the poor weld 210 displayed on the display/input unit 308 is located (Step S4). Specifically, the poor weld 210 included in the image data is located and framed for distinction. Step S4 is executed when the welder inputs the frame in the image data on the display/input unit 308, and the annotator 303 adds the inputted frame to the image data.

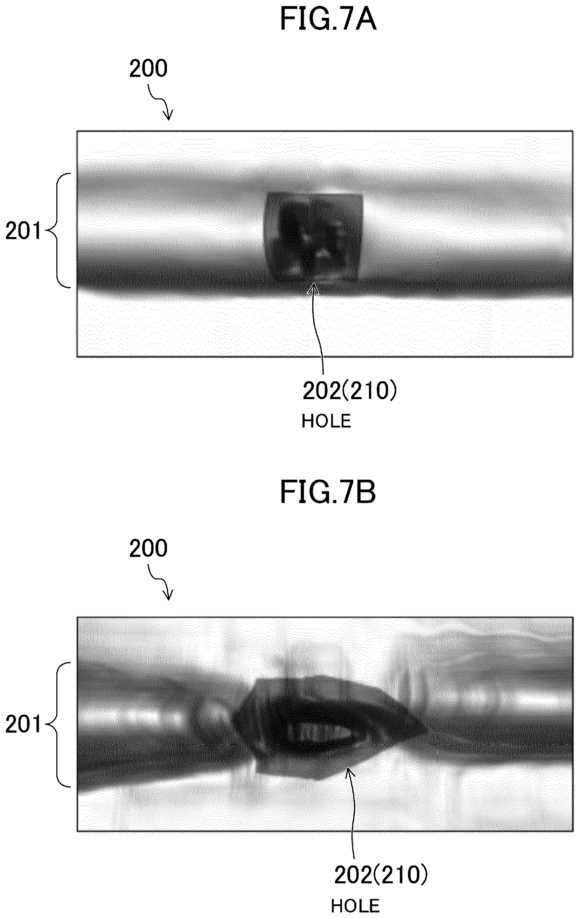

FIG. 7A shows an example of the annotation added on the display/input unit, and FIG. 7B shows another example of the annotation added on the display/input unit. In the examples shown in FIGS. 7A and 7B, the poor weld is the hole 202.

Depending on the size and shape of the poor weld 210, it may be appropriate to surround the poor weld 210 with a rectangle as shown in FIG. 7A. In some cases, it may be appropriate to surround the poor weld 210 with an n-sided polygon (n is an integer of three or more) or a polygon having n vertices as shown in FIG. 7B.

As shown in FIGS. 4A to 4D, most of the poor welds extend three-dimensionally. Thus, it is necessary to locate the poor weld 210 by three-dimensionally surrounding it. However, the annotation support system 300 of the present embodiment can locate the poor weld 210 by surrounding the poor weld 210 on the display screen of the display/input unit 308, i.e., by surrounding the poor weld 210 two-dimensionally. This facilitates the location of the poor weld 210 and reduces the amount of data processed during the location, reducing the system load on the annotation support system 300.

Then, the located poor weld 210 is labelled with the type of the poor weld (Step S5). Specifically, the welder selects and inputs the type of the poor weld corresponding to the poor weld 210 surrounded by the frame on the display/input unit 308. The annotator 303 labels the poor weld 210 with the type of the poor weld, and adds the result of the labeling to the image data. Thus, Step S5 is executed. A list of the types of the poor weld is prepared in advance. When the welder selects the poor weld 210 surrounded by the frame, the list is displayed to allow the welder to select the corresponding type of the poor weld from the list.

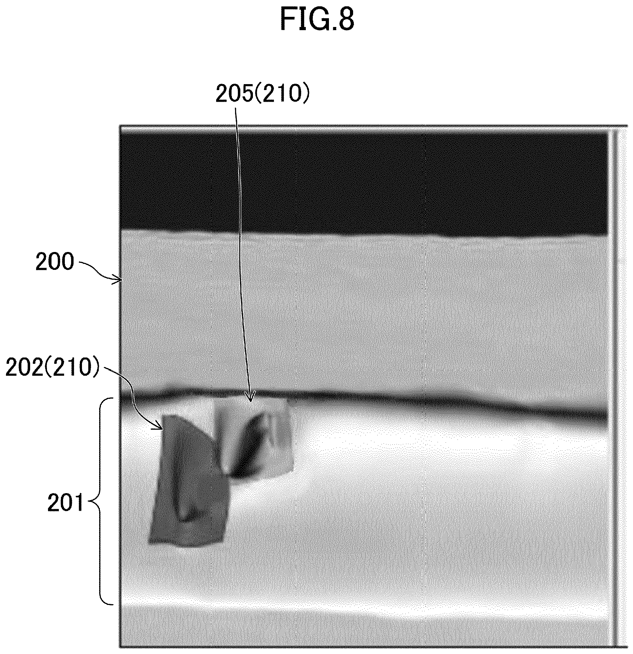

FIG. 8 shows an example of labeling for different types of the poor weld, in which the weld 201 includes two types of poor weld, namely, the hole 202 and the pit 205.

In this case, the insides of the frames surrounding the different types of the poor weld are painted in different colors, and the displayed contents are added to the image data for labeling the poor welds with the types. Note that the labeling of the poor weld with the type is not particularly limited to this method. For example, the type name may be directly displayed on the display/input unit 308, or the number corresponding to the type name may be displayed on the display/input unit 308. All of these methods may be used for the labeling at the same time. For example, the color of the inside of the frame may be changed depending on the type of the poor weld, and the number corresponding to the type name may be displayed on the display/input unit 308. The displayed contents are added to the image data.

The processes of Steps S4 and S5 described above correspond to the addition of the annotation to the image data. The addition of the annotation to the image data generates the teaching data. The teaching data is stored in the storage 306 (Step S6).

In the annotation support system 300 of the present embodiment, data is thinned out from the image data at a predetermined ratio to display the image data on the display/input unit 308 when the manipulation of the image data causes a high load. Thus, the load on the system at the addition of the annotation is reduced. This can reduce the amount of data processed, and can shorten processing time required for adding the annotation. Further, the welder can add the annotation effortlessly without feeling burdened. Note that the manipulation of the image data causes a high load when the image data is moved, rotated, enlarged, or reduced on the display screen of the display/input unit 308. The high load is caused also when adding the annotation to the image data, for example, when labelling the poor weld 210 with the type of the poor weld.

### [Advantages]

As described above, the annotation support system 300 of the present embodiment is a system that supports the addition of the annotation to the image data used for the appearance inspection of the weld 201.

The annotation support system 300 includes at least the annotator 303 that adds the annotation to the image data and the display/input unit 308 that visualizes and displays the process performed by the annotator 303. The annotation support system 300 further includes the storage 306 that stores the image data with the annotation added by the annotator 303, for example, the teaching data.

The annotator 303 is configured to locate the poor weld 210 in the image data and to add the annotation to the image data by labeling the poor weld 210 with the type of the poor weld.

According to the present embodiment, the welder can intuitively locate the poor weld 210 while looking at the image data displayed on the display/input unit 308. That is, the welder can easily add the annotation about the poor weld to the image data of the weld 201. Although the welder is not skillful at welding, the welder can add the annotation to the image data of the weld 201.

The image data with the annotation added can be stored in the storage 306, and can be reused as the teaching data for adding the annotation to different image data.

The display/input unit 308 is configured to be able to display the image data rotated, enlarged, or reduced in a predetermined direction. The display/input unit 308 is configured to be able to change the format to display the image data to improve the visibility of the image data.

The image data to which the annotation is added is usually point group data in three-dimensional space. Thus, it may be difficult for the welder to visually recognize the poor weld 210 only by displaying the data values shaded in two dimensions.

According to the present embodiment, the image data can be rotated, enlarged, or reduced in a predetermined direction, or displayed in a different display format, to improve the visibility of the image data. This allows the welder to visually recognize the weld 201 easily in three dimensions and to easily check whether the poor weld 210 is present and identify the type of the poor weld.

When the manipulation of the image data causes a high load, the display/input unit 308 preferably thins out data from the image data at a predetermined ratio for display of the image data.

This can reduce the amount of data processed, and can shorten time required for adding the annotation. Further, the welder can add the annotation effortlessly without feeling burdened.

Note that the manipulation of the image data causes a high load when the image data is moved, rotated, enlarged, or reduced. The addition of the annotation to the image data also causes a high load.

When the image data includes an image of the poor weld 210, the annotation is preferably added in the following manner.

First, the poor weld 210 is surrounded by a frame on the display/input unit 308. Next, the framed region is at least painted in a color corresponding to the type of the poor weld or assigned with a number corresponding to the type of the poor weld to label the poor weld 210 with the type of the poor weld.

Thus, the welder can easily and intuitively add the annotation to the image data of the weld 201. This can significantly reduce the time required for the annotation.

The learning support system 100 of the present embodiment is a system that supports the learning of an appearance inspection model used for appearance inspection of the weld 201.

The learning support system 100 includes at least the data acquisition unit 101 that acquires the image data of the weld 201 and the storage that stores at least multiple pieces of learning data generated based on the image data with the annotation added by the annotation support system 300 and the appearance inspection model.

The learning support system 100 further includes the data divider 105 that divides each of the multiple pieces of learning data into pieces of learning data of a predetermined size. The learning support system 100 includes the learning unit 107 that performs machine learning on the appearance inspection model based on the multiple pieces of learning data divided by the data divider 105 and the image data acquired from the data acquisition unit 101 and divided into pieces of image data of a predetermined size by the data divider 105 to generate a plurality of learned models. The learning support system 100 further includes the evaluation unit 108 that evaluates the learned models in accordance with a predetermined evaluation criterion and selects the learned model having the best result among the learned models as the appearance inspection model.

The learning support system 100 includes the update unit 109 that updates the appearance inspection model to the learned model selected by the evaluation unit 108. The function of the update unit 109 may be incorporated in the evaluation unit 108. In this case, the evaluation unit 108 evaluates the learned models in accordance with the predetermined evaluation criterion, selects the learned model with the best result as the appearance inspection model, and updates the appearance inspection model to the learned model selected by the evaluation unit 108.

According to the present embodiment, a welder with little knowledge of AI and machine learning can easily handle the appearance inspection model and the appearance inspection software used for the appearance inspection of the weld 201. This can also reduce time required for the welder to generate and update the appearance inspection model than before.

The learning support system 100 preferably further includes the data augmentation unit 104 that performs a data augmentation process based on the image data with the annotation added to generate multiple pieces of learning data.

This can reduce time required to generate the teaching data and can shorten the entire work time required to generate and update the appearance inspection model. Further, a series of processes from the generation of the learning data to the learning and evaluation of the appearance inspection model can be executed in the learning support system 100, allowing the welder to easily handle the appearance inspection model and the appearance inspection software used for the appearance inspection of the weld 201.

### (Second Embodiment)

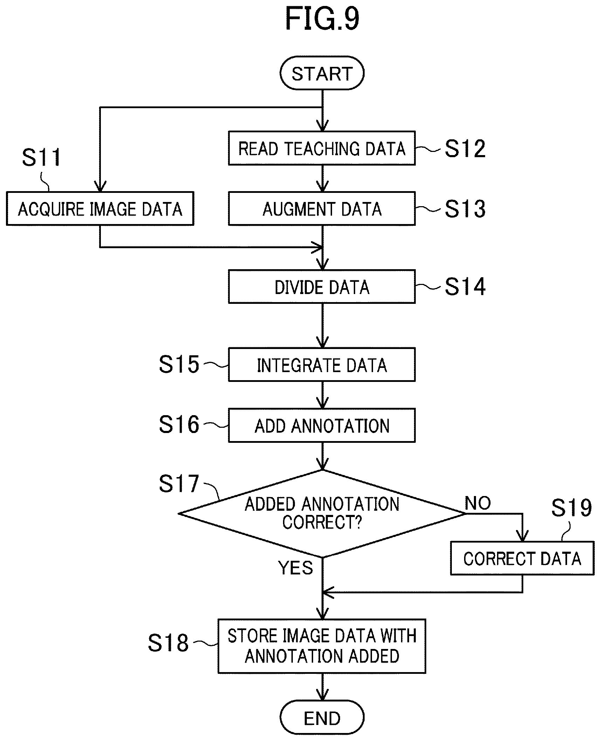

FIG. 9 is a flowchart of a process of adding an annotation according to the present embodiment. In the present embodiment, it will be described an example in which the annotation is semi-automatically added to image data. Thus, the annotation support system 300 of the present embodiment and its functional blocks are the same as those of the first embodiment, and will not be described in detail below. The annotation is "semi-automatically added" means that the annotation is added to newly acquired image data of the weld 201 by using the inference function of the annotation support system 300, while a predetermined amount or more of the teaching data has been prepared in advance. In this case, the teaching data itself is generated by the welder in the process described in the first embodiment. When the annotation is semi-automatically added, image data or teaching data in which the poor weld 210 is surrounded by a simple frame, for example, a rectangular frame, is generally used for a smooth inference process.

First, the image data of the weld 201 is newly acquired from the data acquisition unit 301 (Step S11). Although not shown, if the image data is not in a format that is available for a learning process, the data format converter 302 converts the image data into a format available for the learning process. The newly acquired image data is stored in the storage 306.

The teaching data stored in the storage 306 is read (Step S12). The teaching data may be read from the outside of the annotation support system 300.

The data augmentation unit 304 performs a data augmentation process based on the read teaching data (Step S13). When Step S13 is executed, multiple pieces of learning data are generated and stored in the storage 306. The original teaching data is transmitted to the data divider 305 separately from the learning data.

A data augmentation process for the teaching data is performed, for example, in the following manner.

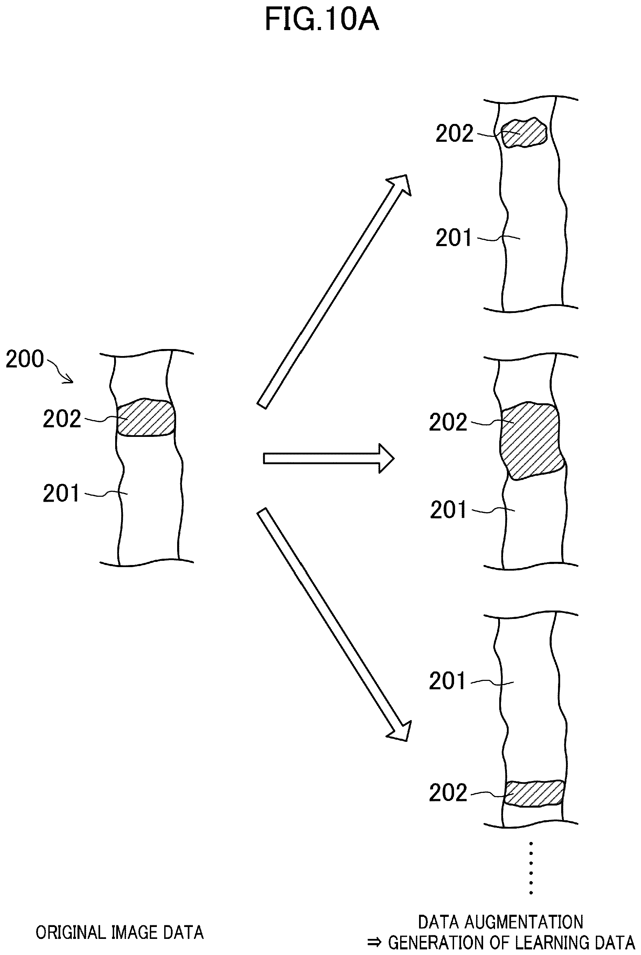

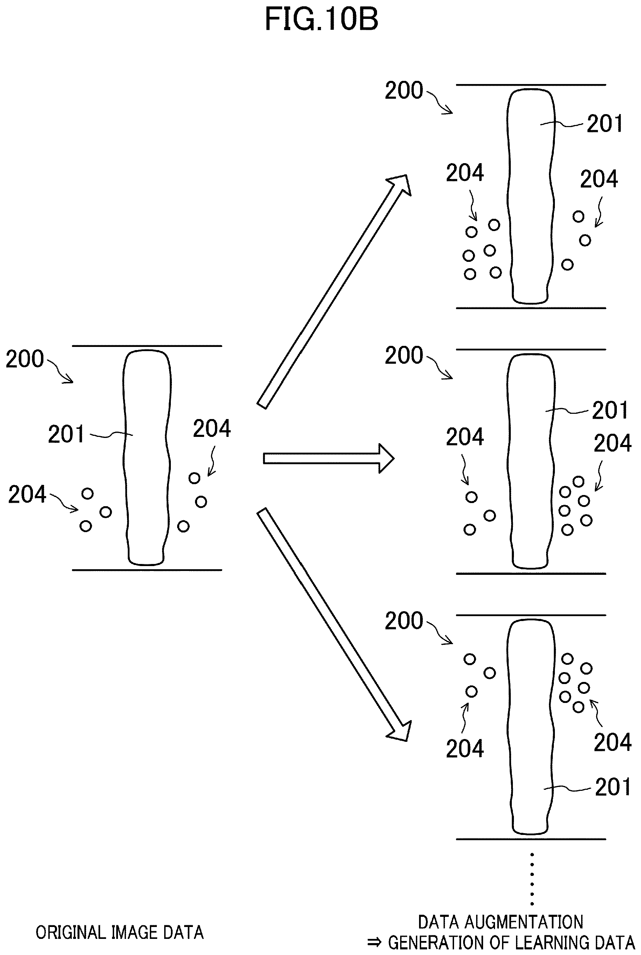

FIG. 10A schematically shows an example of the data augmentation process, and FIG. 10B schematically shows another example of the data augmentation process.

For example, as shown in FIG. 10A, multiple pieces of learning data that are different in size or position of the hole 202 are generated based on the teaching data which is the original image data. In this case, the height from the reference plane and the difference in height between two or more points in the weld 201 are extracted as the feature values, and are varied. Although not shown, multiple pieces of learning data can be generated by the same process for the pit 205. Further, multiple pieces of learning data in which the size and position of the spatter 204 and the smut 206 are changed can be generated by the same process performed around the weld 201 (see FIG. 10B).

Then, the data divider 105 divides the image data acquired in Step S11 into pieces of image data of a size available for the learning process. The data divider 105 also divides each of the multiple pieces of learning data generated in Step S13 into pieces of learning data of a size available for the learning process (Step S14).

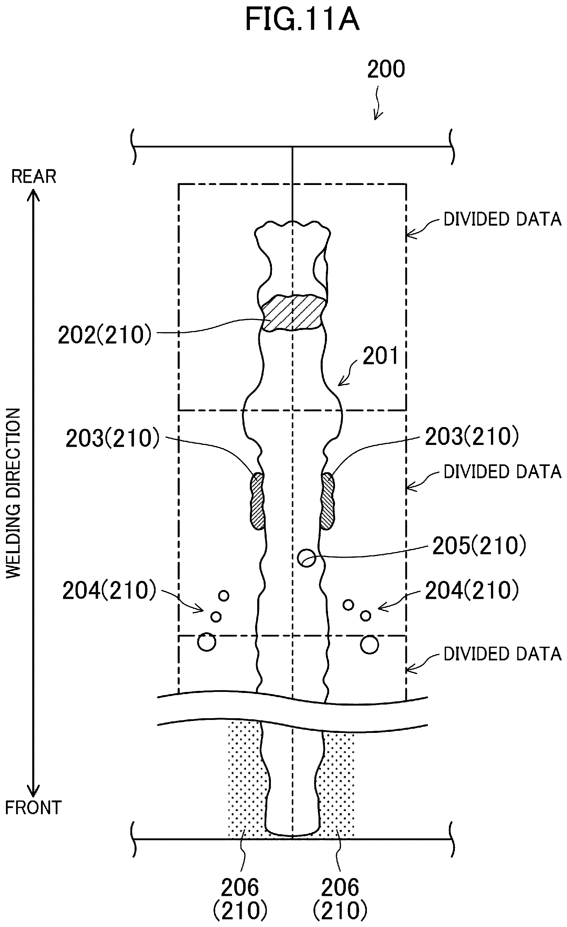

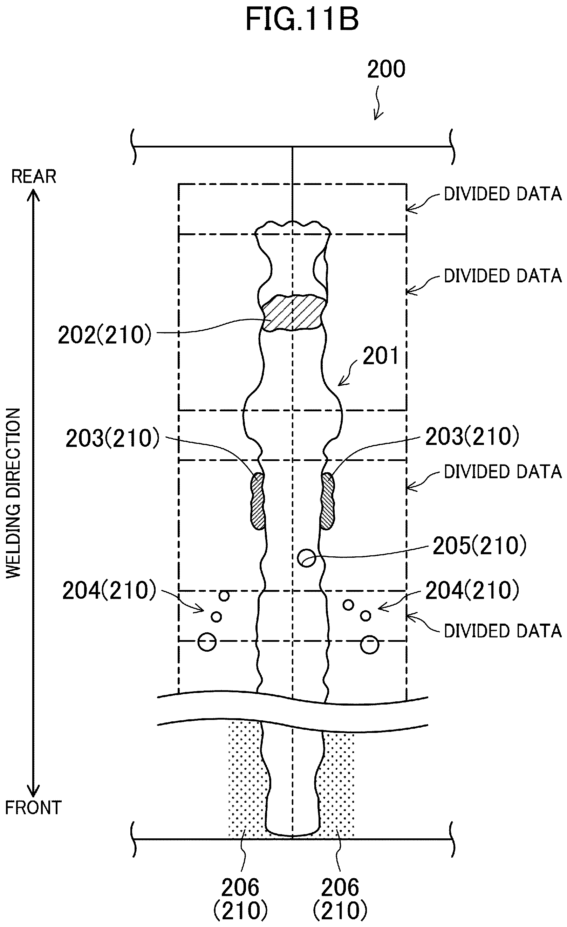

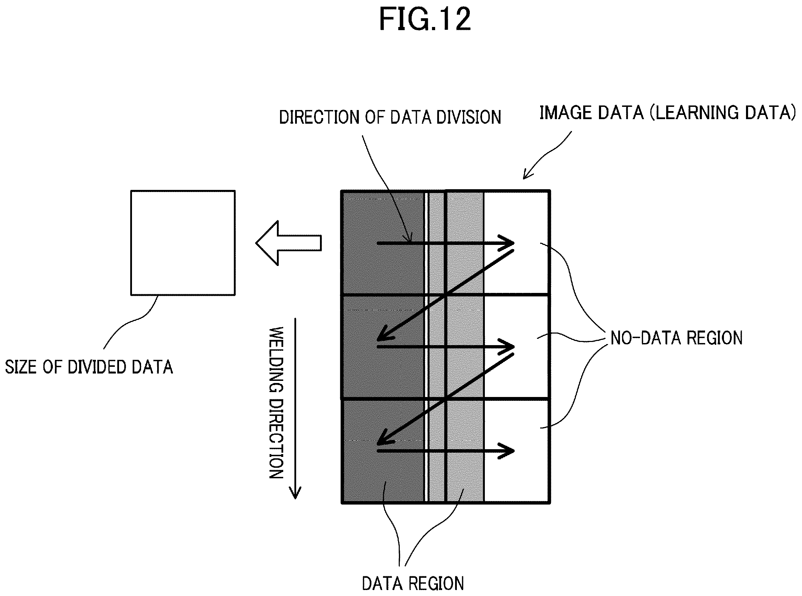

FIG. 11A schematically shows an example of the process of dividing the image data, and FIG. 11B schematically shows another example of the process of dividing the image data. FIG. 12 is a schematic view illustrating an example of a process of image data interpolation.

As shown in FIGS. 11A and 11B, a dividing method can be selected from multiple options. As shown in FIG. 11A, the image data or the learning data may be divided from the front side or the rear side along the welding direction. Alternatively, the data may be divided from both of the front and rear sides. As shown in FIG. 11B, the image data or the learning data may be divided so that multiple pieces of data, i.e., divided pieces of data, partially overlap with each other.

When the data is divided in a different direction or by a different width, the position of the poor weld 210 in the divided data changes. Thus, although the pieces of learning data include the same poor weld 210, the pieces of learning data are handled as different ones for use in machine learning. That is, a kind of data augmentation process is performed by changing the dividing direction and the dividing width.

When the size of the image data or the learning data is large in a direction intersecting with the welding direction, the data can be divided as shown in FIG. 12. In this case, the divided pieces of data may be associated with each other by giving the order of division indicated by the arrows to the divided pieces of data.

The storage 306 stores an AI setting file describing various parameters for controlling the operation of the inference engine set in the learning/inferring unit 307. The AI setting file describes the maximum data size that can be learned by the inference engine. The data divider 305 may determine the size by which the data is divided by referring to the maximum data size in the AI setting file. In YOLO, which is the inference engine described above, the size of data inputted is fixed. When an inference engine other than YOLO is used and the size of the data inputted is variable, the image data or the learning data may be divided by a size equal to or smaller than the maximum size available for the learning process.

The learning data including the image data and the teaching data may include a region with no data value (which may be hereinafter sometimes referred to as a no-data region). The data value in this case is, for example, a preset height from the reference plane or a difference in luminance with respect to the luminance of the reference surface. In other words, the no-data region is a region in the image data including a missing value. In the image data or the teaching data acquired in Step S11, for example, a region not including the weld 201 may have no data value. If the divided image data or learning data includes the non-data region, an inference process by the inference engine set in the learning/inferring unit 307 cannot be correctly performed in the machine learning performed in Step S16 described later. Thus, a data interpolation process is performed on the no-data region after the data division.

When the image data or the learning data is divided as shown in FIG. 12, for example, data regions corresponding to the workpiece 200 have data values, whereas the no-data regions not including the workpiece 200 have no data value. For the data interpolation on the no-data regions, one of the following two methods is selected.

One is minimum interpolation, in which the minimum value in the divided data is substituted for the data value of the no-data region. The other is nearest neighbor interpolation, in which a data value of a pixel in contact with the no-data region is substituted for the data value of the no-data region. The image data is a set of pixel signals from a plurality of images. Thus, the nearest neighbor interpolation is performed on a pixel-by-pixel basis at the boundary between the data region and the no-data region.

The learning data divided and generated in Step S14 is part of the learning data used in Step S16. Thus, it is not necessary to associate the divided pieces of learning data with each other.

In Step S16, an annotation is semi-automatically added to the image data acquired in Step S11. If the image data with the annotation added is used as the teaching data alone, it is not necessary to associate the divided pieces of image data with each other.

However, when the annotation is semi-automatically added to the image data, it is necessary to determine whether the annotation result is valid (see Step S17).

Thus, the divided pieces of image data, being associated with each other, are transmitted to the learning/inferring unit 307. That is, the divided pieces of image data are transmitted to the learning/inferring unit 307, with information that each piece of data is of the same weld 201 and information about its position in the original image data added thereto. This association is performed by the data divider 305.

Next, the divided pieces of learning data stored in the storage 306 including the learning data generated in the past are mixed and integrated with the pieces of learning data and image data divided in Step S14 to generate an integrated data group (Step S15).

The inspection model suited for the material and welding method of the workpiece 200 and the shape of the weld 201 is read from the storage 306 to the learning unit 107. After the integrated data group generated in Step S15 is inputted to the learning unit 107, the learning/inferring unit 307 adds an annotation to the divided image data to which no annotation is added (Step S16). The inspection model is a model used for the semi-automatic addition of the annotation. More specifically, based on the inputted integrated data group and inspection model, the inference engine set in the learning/inferring unit 307 executes an inference process for the divided image data to which no annotation is added. When the poor weld 210 exists in the image data, the poor weld 210 is surrounded by a rectangular frame, and the inside of the frame is painted in a color corresponding to the type of the poor weld. That is, the poor weld is labelled with the type. In other words, the annotation is added to the image data. The added annotation information, the frame with the colored inside in this case, is incorporated into the image data.

Next, it is determined whether the added annotation is valid (Step S17). The welder performs Step S17 while visually checking the image data before and after adding the annotation on the display/input unit 308. In this case, for better visibility and easy handling by the welder, the image data before and after adding the annotation is rotated, enlarged, or reduced in a predetermined direction on the display/input unit 308, or the image data is displayed in a different display format.

For comparison with the image data before adding the annotation, the divided pieces of image data with the annotation added are combined in an array before the division based on the position information added to each of the divided pieces of image data.

If the determination made in Step S17 is positive, that is, if the annotation added by the learning/inferring unit 307 has no error, the image data with the annotation added is stored in the storage 306 (Step S18), and the process of adding the annotation ends. The image data stored in the storage 306 in Step S18 can be used as the teaching data for subsequent annotations.

If the determination made in Step S17 is negative, that is, if the annotation added by the learning/inferring unit 307 is erroneous, the added annotation information is corrected (Step S19).

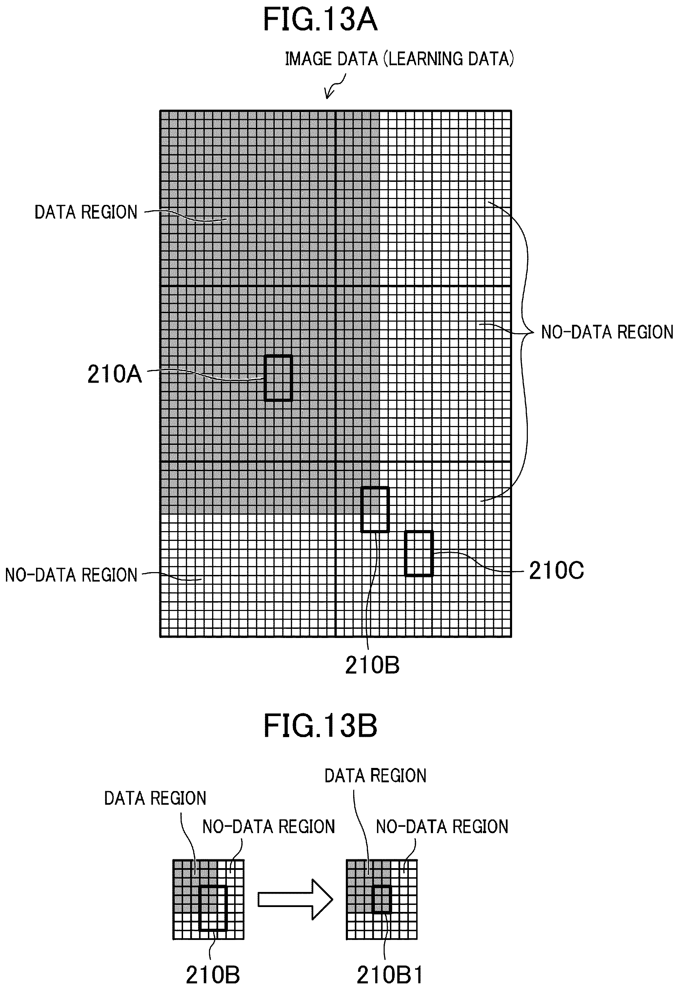

FIGS. 13A and 13B schematically illustrate examples of the process of correcting the annotation. In FIG. 13A, regions surrounded by thick lines correspond to the divided pieces of data. In FIGS. 13A and 13B, rectangular regions surrounded by thin lines correspond to pixels in an imaging device (not shown).

As shown in FIG. 13A, the image data with the annotation added in the process of Step S16 includes the no-data regions and the data regions as described above. Further, as a result of the process of Step S16, poor welds 210A, 210B, and 210C are located.

The poor weld 210A is located in the data region. That is, the poor weld 210A is in the weld 201, and it can be said that the annotation is correctly added by the learning/inferring unit 307.

The poor weld 210C is in the no-data region. In this case, it is considered from the result of the determination in Step S18 that the annotation is erroneously added to a part with no poor weld. Thus, the welder deletes the frame and the type of the poor weld given to the poor weld 210C via the display/input unit 308. That is, the annotation added by the learning/inferring unit 307 is corrected. The corrected image data is stored in the storage 306 (Step S18).

The poor weld 210B extends across the data region and the no-data region. In this case, the poor weld 210B in the no-data region is regarded as invalid and requires correction.

In the present embodiment, as shown in FIG. 13B, the size of the frame surrounding the poor weld 210B is corrected so that the region recognized to be the poor weld is present only in the data region. As a result, the poor weld 210B in the image data is corrected to the poor weld 210B1 as shown in FIG. 13B. The image data with the result of the correction incorporated is stored in the storage 306 (Step S18).

As described above, the annotation support system 300 can be used to semi-automatically add the annotation about the poor weld to image data of the weld 201. When the added annotation information has an error, corrected data in which the error is corrected is stored in the storage 306. This can reduce the error in the subsequent annotations. Although FIGS. 13A and 13B show the examples of correction of the position and size of the poor weld 210, it is needless to say that the erroneous labeling of the poor weld is also corrected. For example, when the poor weld to be recognized as the undercut 203 is erroneously recognized as the hole 202, the welder re-assigns the type of the poor weld. The image data with the correction result incorporated is stored in the storage 306.

At a defect detection process by a customer using the appearance inspection model, the method of correction of the annotation shown in FIGS. 13A and 13B is used. This correction method is also used for the evaluation of an AI model as the inference engine.

When the added annotation is erroneous, the inspection model needs to be enhanced by relearning.

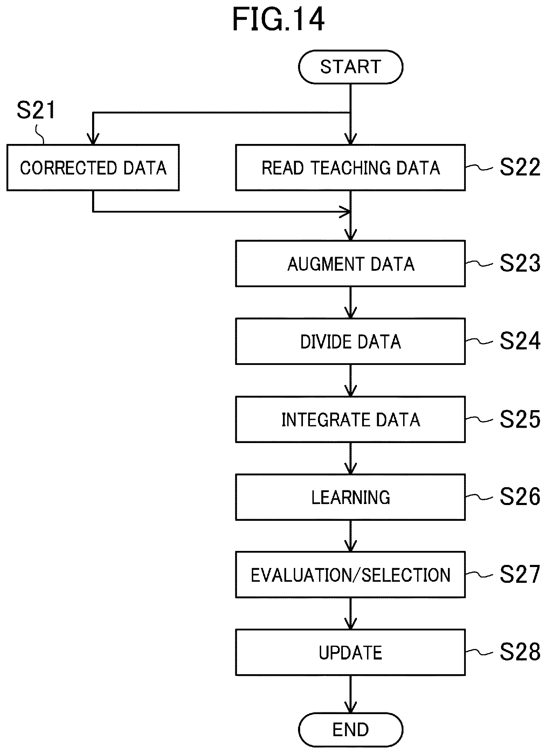

FIG. 14 shows a flowchart of a process of updating the inspection model. Steps S22 to S25 in this flowchart are the same as Steps S12 to S15 shown in FIG. 9, and will not be described in detail below. Note that Step S21 is different from Step S11 shown in FIG. 9 in that corrected data, which is image data in which the error of the added annotation is corrected, is read from the storage 306. In Step S23, a data augmentation process is performed on the corrected data read in Step S22.

Next, the divided pieces of learning data stored in the storage 306 including the learning data generated in the past are mixed and integrated with the pieces of learning data and the corrected data divided in Step S24 to generate an integrated data group (Step S25).

The inspection model that needs the relearning is read from the storage 306 to the learning/inferring unit 307. After the integrated data group generated in Step S25 is inputted to the learning/inferring unit 307, machine learning is performed on the inspection model (Step S26). In other words, the machine learning is performed on the inspection model that is read from the storage 306 based on the multiple pieces of learning data and the corrected data divided by the data divider 305. In the course of the machine learning, multiple learned models are generated as described above. These learned models are temporarily stored in the storage 306.

In general, the machine learning is repeated a predetermined number of times, and the learned model is generated for each learning. In addition, the learning support system 100 generates related sequence data groups. Each sequence data group is stored in the storage 306. When YOLO is used as the inference engine, the machine learning is repeated about 10,000 times. When the learning/inferring unit 307 includes a plurality of graphics processing units (GPUs) and YOLO is used as the inference engine, the learning is performed a predetermined number of times, for example, about 1,000 times, by the first GPU, and then the machine learning is repeated by the subsequent GPU. In the present embodiment, the switching of the GPU is also automatically executed by the annotation support system 300.

The learning/inferring unit 307 evaluates the learned models read from the storage 106 in accordance with a predetermined evaluation criterion, and selects the learned model having the best result among the learned models as the inspection model (Step S27). Specifically, the learned model with the highest detection rate is selected as the optimum model. An evaluation unit (not shown) may be provided as the functional block of the annotation support system 300, and Step S27 may be executed by the evaluation unit.

A series of processes from Steps S24 to S27 can be executed at once by the operation on the display/input unit 308. For example, on the display/input unit 308, a sequence data group including the target inspection model is selected and read, and a method of dividing the learning data and the corrected data is selected. A learning preparation method, for example, whether to generate a model from scratch or to correct or update the selected inspection model (weight file), is selected.

In this state, an execution command is inputted to the display/input unit 308 to execute the series of processes from Steps S24 to S27. The execution command is inputted by, for example, clicking an execution button displayed on the display screen of the display/input unit 308.

Note that Steps S24, S26, and S27 may be executed individually.

Next, the learning/inferring unit 307 or the evaluation unit described above updates the inspection model to the learned model selected in Step S27. The updated inspection model is stored in the storage 306 with a file name different from that of the original appearance inspection model (Step S28).

The process of Step S28 may be executed simultaneously with the series of processes of Steps S24 to S27 by the operation on the display/input unit 308.

As shown in FIG. 2 and described in the present embodiment, the annotation support system 300 includes the data divider 305 that divides each of the image data and the teaching data into pieces of data of a predetermined size, and the learning/inferring unit 307 in which the inspection model used for adding the annotation to the image data is set. The learning/inferring unit 307 adds the annotation to newly acquired image data based on the teaching data and the inspection model.

According to the present embodiment, the annotation about a poor weld can be semi-automatically added to the image data of the weld 201. When the added annotation information has an error, corrected data in which the error is corrected is stored in the storage 306. This can reduce the error in the subsequent annotations.

By the method described in the first embodiment, the welder observes the entire weld 201 and adds the annotation to the poor welds. Thus, it takes about one day for the check of a single sample.

According to the present embodiment, however, the annotation support system 300 is used to semi-automatically add the annotation, reducing the time required for adding the annotation to about five minutes to an hour per sample.

The annotation support system 300 may further include the data augmentation unit 304 that performs a data augmentation process based on the teaching data to generate multiple pieces of learning data.

The learning/inferring unit 307 adds the annotation to newly acquired image data based on the divided pieces of learning data.

This can significantly reduce the time required to generate the learning data that can be used as the teaching data. Further, this can generate a large amount of learning data, and can significantly reduce the welder's workload and working hours required to add the annotation. The annotation support system 300 can execute a series of processes from the generation of the learning data to the learning and evaluation of the inspection model, allowing the welder to easily handle the inspection model.

When the divided pieces of image data and learning data do not include the image of the workpiece 200, it is preferable to interpolate data in the no-data regions where the workpiece 200 does not exist as described below.

That is, the data divider 305 preferably substitutes, for the region where the workpiece 200 is not present, the minimum value of the divided pieces of image data and learning data or a data value of the region closest to the region where the workpiece 200 is not present.

In this way, when the divided pieces of image data and learning data are inputted to a known inference engine set in the learning/inferring unit 307, the learning process can be executed with no error. Thus, the annotation can be semi-automatically added to the weld 201.

In the image data, the learning/inferring unit 307 may infer that the poor weld 210 exists in the no-data region where the weld 201 does not exist. That is, the semi-automatic addition of the annotation by the annotation support system 300 may fail.

In this case, the learning/inferring unit 307 does not reflect the inference result in the image data, or changes the size and position of the poor weld 210 in the image data so that the image data includes the weld 201 alone.

Thus, the image data with the annotation added can be used as the teaching data. The welder deletes the frame in the image data or changes the position and size of the region surrounded by the frame via the display/input unit 308. The learning/inferring unit 307 adds the result of the process performed by the welder to the image data and corrects the added annotation.

The storage 306 further stores the inspection model and the learning data, enabling the semi-automatic addition of the annotation and the update of the inspection model to be continuously executed in the annotation support system 300.

The learning/inferring unit 307 performs the machine learning on the inspection model based on the divided pieces of image data and teaching data to generate a plurality of learned models. Further, the learning/inferring unit 307 evaluates the plurality of learned models in accordance with a predetermined evaluation criterion, and updates the inspection model to the learned model with the best result among the learned models.

According to the present embodiment, a welder with little knowledge of AI and machine learning can easily handle the inspection model used to add the annotation about the poor weld. Further, time required for the welder to update the inspection model can be greatly shortened.

In the example shown FIG. 14, the relearning of the inspection model is performed using the corrected data after the annotation information is corrected, but the image data with the annotation appropriately added may be newly acquired and used for the relearning.

The addition of the annotation to the image data of the weld 201 and the update of the inspection model may be performed by a system administrator. The system administrator includes not only a developer and designer of the annotation support system 300 but also a maintenance person in charge of repairs of the annotation support system 300.

### INDUSTRIAL APPLICABILITY

The annotation support system of the present disclosure is useful because a welder with little knowledge of AI and machine learning can easily add an annotation to a weld in image data.

### DESCRIPTION OF REFERENCE CHARACTERS

- 100: Learning Support System
- 101: Data Acquisition Unit
- 102: Data Format Converter
- 104: Data Augmentation Unit
- 105: Data Divider
- 106: Storage
- 107: Learning Unit
- 108: Evaluation Unit
- 109: Update Unit
- 110: Display/Input Unit
- 200: Workpiece
- 201: Weld
- 202: Hole
- 203: Undercut
- 204: Spatter
- 205: Pit
- 206: Smut
- 210: Poor Weld
- 300: Annotation Support System
- 101: Data Acquisition Unit
- 102: Data Format Converter
- 303: Annotator
- 304: Data Augmentation Unit
- 305: Data divider
- 306: Storage
- 307: Learning/Inferring Unit
- 308: Display/Input Unit
- 309: Output Unit

## Claims

1. An annotation support system (300) for image data used for appearance inspection of a weld (201), the annotation support system (300) comprising at least:
an annotator (303) configured to add an annotation to the image data;
a display/input unit (308) configured to visualize and display a process performed by the annotator (303); and
a storage (106) configured to store the image data having the annotation added by the annotator (303), wherein
the annotator (303) is configured to add the annotation to the image data by locating a poor weld (210) in the image data and labelling the poor weld (210) with a type of the poor weld, the storage (106) is further configured to store teaching data in which the position and size of the poor weld (210) are identified, and a type of the poor weld is added to the poor weld (210) in advance, the annotation is added to newly acquired image data based on the teaching data, the annotation support system further (300) comprises:
a data divider (105) that is configured to divide each of the image data and the teaching data into pieces of a predetermined size; and
a learning/inferring unit (107) which is configured to set an inspection model used to add the annotation to the image data,
wherein the learning/inferring unit (107) is configured to add the annotation to newly acquired image data based on the teaching data and the inspection model, wherein
the learning/inferring unit (107) is configured to perform machine learning on the inspection model based on the divided pieces of the image data and teaching data to generate a plurality of learned models, and is configured to evaluate
the plurality of learned models in accordance with a predetermined evaluation criterion, and to update
the inspection model to the learned model having the best result among the learned models.

2. The annotation support system (300) of claim 1, further comprising:
a data format converter (102) that is configured to convert a format of the image data into a format that can be handled by the learning/inferring unit (107), wherein
when the data format converter (102) has converted the format of the image data, the annotator (303) adds the annotation to the image data of which the format has been converted.

3. The annotation support system (300) of claim 1 or 2, wherein
the image data is point group data in three-dimensional space.

4. The annotation support system (300) of claim 3, wherein
the display/input unit (308) is configured to be able to display the image data rotated, enlarged, or reduced in a predetermined direction and to change a format to display the image data to improve visibility of the image data.

5. The annotation support system (300) of claim 3 or 4, wherein
the display/input unit (308) is configured to thin out data from the image data at a predetermined ratio to display the image data when the image data is moved, rotated, enlarged, or reduced, or when the annotation is added to the image data.

6. The annotation support system (300) of any of the claims 1 to 5, further comprising:
a data augmentation unit (104) that is configured to perform a data augmentation process based on the teaching data to generate multiple pieces of learning data, wherein
the learning/inferring unit (107) is configured to add an annotation to newly acquired image data based on the multiple pieces of learning data divided.

7. The annotation support system (300) of claim 6, wherein
when the divided pieces of image data and learning data include a no-data region,
the data divider (105) substitutes, for the no-data region, a minimum value of the divided pieces of image data and learning data, or a data value of a region closest to the no-data region.

8. The annotation support system (300) of claim 6 or 7, wherein
when the learning/inferring unit (107) infers that the poor weld exists in a region without the weld (201) in the image data,
the learning/inferring unit (107) does not reflect the inference result in the image data or changes the size and position of the poor weld (210) in the image data so that the image data includes the weld (201) alone.

9. The annotation support system (300) of any one of claims 6 to 8, wherein the storage (106) is further configured to store the inspection model and the pieces of learning data.

10. The annotation support system (300) of any one of claims 1 to 9, wherein when the image data includes an image of the poor weld (210),
the poor weld (210) is surrounded by a frame on the display/input unit (110), and
a region surrounded by the frame is at least painted in a color corresponding to the type of the poor weld (210) or assigned with a number corresponding to the type of the poor weld to label the poor weld with the type of the poor weld.

11. A learning support system (100) for a weld appearance inspection model, the learning support system (100) comprising at least:
a data acquisition unit (101) that is configured to acquire image data of the weld (201);
the annotation support system (300) of any one of claims 1 to 10;
a storage (106) that is configured to store
at least multiple pieces of learning data generated based on the image data having the annotation added by the annotation support system (300) and the appearance inspection model;
a data divider (105) that is configured to divide
each of the multiple pieces of learning data into pieces of learning data of a predetermined size;
the storage (106) configured to store
the divided pieces of learning data and the appearance inspection model;
a learning unit (107) that is configured to perform machine learning on the appearance inspection model read from the storage based on the multiple pieces of learning data divided by the data divider and the image data acquired from the data acquisition unit (101) and divided into pieces of image data of the predetermined size by the data divider to generate a plurality of learned models; and
an evaluation unit (108) that is configured to evaluate the plurality of learned models in accordance with a predetermined evaluation criterion to select the learned model having the best result among the learned models.

12. The learning support system (100) of claim 11, wherein
the evaluation unit (108) is configured to update
the appearance inspection model to the selected learned model, or
the learning support system (100) further comprises an update unit (109) that is configured to update the appearance inspection model to the learned model selected by the evaluation unit (108).

13. The learning support system (100) of claim 11 or 12, further comprising:
a data augmentation unit (104) that is configured to perform
a data augmentation process based on the image data with the annotation added to generate the multiple pieces of learning data.

## Patentansprüche

1. Annotationsunterstützungssystem (300) für Bilddaten, die für eine Erscheinungsbildinspektion einer Schweißnaht (201) verwendet werden, wobei das Annotationsunterstützungssystem (300) mindestens umfasst:
einen Annotator (303), der dazu konfiguriert ist, eine Annotation zu den Bilddaten hinzuzufügen;
eine Anzeige-/Eingabeeinheit (308), die dazu konfiguriert ist, einen von dem Annotator (303) durchgeführten Prozess zu visualisieren und anzuzeigen; und
einen Speicher (106), der dazu konfiguriert ist, die Bilddaten, zu denen die Annotation durch den Annotator (303) hinzugefügt wurde, zu speichern,
wobei
der Annotator (303) dazu konfiguriert ist, die Annotation zu den Bilddaten hinzuzufügen, indem eine fehlerhafte Schweißnaht (210) in den Bilddaten lokalisiert wird und die fehlerhafte Schweißnaht (210) mit einem Typ der fehlerhaften Schweißnaht gekennzeichnet wird,
der Speicher (106) ferner dazu konfiguriert ist, Lehrdaten zu speichern, in denen die Position und die Größe der fehlerhaften Schweißnaht (210) identifiziert sind und ein Typ der fehlerhaften Schweißnaht der fehlerhaften Schweißnaht (210) im Voraus hinzugefügt ist,
die Annotation zu neu erfassten Bilddaten auf der Grundlage der Lehrdaten hinzugefügt wird,
das Annotationsunterstützungssystem (300) ferner umfasst:
einen Datenteiler (105), der dazu konfiguriert ist, jede der Bilddaten und der Lehrdaten in Stücke einer vorbestimmten Größe zu teilen; und
eine Lern-/Inferenzeinheit (107), die dazu konfiguriert ist, ein Inspektionsmodell festzulegen, das verwendet wird, um die Annotation zu den Bilddaten hinzuzufügen,
wobei die Lern-/Inferenzeinheit (107) dazu konfiguriert ist, die Annotation zu neu erfassten Bilddaten auf der Grundlage der Lehrdaten und des Inspektionsmodells hinzuzufügen,
wobei die Lern-/Inferenzeinheit (107) dazu konfiguriert ist, ein maschinelles Lernen an dem Inspektionsmodell auf der Grundlage der geteilten Stücke der Bilddaten und der Lehrdaten durchzuführen,
um eine Vielzahl von gelernten Modellen zu erzeugen, und dazu konfiguriert ist, die Vielzahl von gelernten Modellen gemäß einem vorbestimmten Bewertungskriterium zu bewerten und das Inspektionsmodell auf das gelernte Modell mit dem besten Ergebnis unter den gelernten Modellen zu aktualisieren.

2. Annotationsunterstützungssystem (300) nach Anspruch 1, ferner umfassend:
einen Datenformatwandler (102), der dazu konfiguriert ist, ein Format der Bilddaten in ein Format umzuwandeln, das von der Lern-/Inferenzeinheit (107) verarbeitet werden kann,
wobei
dann, wenn der Datenformatwandler (102) das Format der Bilddaten umgewandelt hat, der Annotator (303) die Annotation zu den Bilddaten hinzufügt, deren Format umgewandelt wurde.

3. Annotationsunterstützungssystem (300) nach Anspruch 1 oder 2, wobei
die Bilddaten Punktgruppendaten in einem dreidimensionalen Raum sind.

4. Annotationsunterstützungssystem (300) nach Anspruch 3, wobei
die Anzeige-/Eingabeeinheit (308) dazu konfiguriert ist, die Bilddaten in einer vorbestimmten Richtung gedreht, vergrößert oder verkleinert anzeigen zu können und ein Format zum Anzeigen der Bilddaten zu ändern, um die Sichtbarkeit der Bilddaten zu verbessern.

5. Annotationsunterstützungssystem (300) nach Anspruch 3 oder 4, wobei
die Anzeige-/Eingabeeinheit (308) dazu konfiguriert ist, Daten aus den Bilddaten mit einem vorbestimmten Verhältnis auszudünnen, um die Bilddaten anzuzeigen, wenn die Bilddaten verschoben, gedreht, vergrößert oder verkleinert werden oder wenn die Annotation zu den Bilddaten hinzugefügt wird.

6. Annotationsunterstützungssystem (300) nach einem der Ansprüche 1 bis 5, ferner umfassend:
eine Datenaugmentierungseinheit (104), die dazu konfiguriert ist, einen Datenaugmentierungsprozess auf der Grundlage der Lehrdaten durchzuführen, um mehrere Stücke von Lerndaten zu erzeugen,
wobei
die Lern-/Inferenzeinheit (107) dazu konfiguriert ist, eine Annotation zu neu erfassten Bilddaten auf der Grundlage der mehreren geteilten Stücke von Lerndaten hinzuzufügen.

7. Annotationsunterstützungssystem (300) nach Anspruch 6, wobei
dann, wenn die geteilten Stücke von Bilddaten und Lerndaten einen datenfreien Bereich umfassen,
der Datenteiler (105) für den datenfreien Bereich einen Minimalwert der geteilten Stücke von Bilddaten und Lerndaten oder einen Datenwert eines Bereichs, der dem datenfreien Bereich am nächsten liegt, substituiert.

8. Annotationsunterstützungssystem (300) nach Anspruch 6 oder 7, wobei
dann, wenn die Lern-/Inferenzeinheit (107) folgert, dass die fehlerhafte Schweißnaht in einem Bereich ohne die Schweißnaht (201) in den Bilddaten existiert,
die Lern-/Inferenzeinheit (107) das Inferenzergebnis nicht in den Bilddaten widerspiegelt oder die Größe und die Position der fehlerhaften Schweißnaht (210) in den Bilddaten ändert, sodass die Bilddaten die Schweißnaht (201) allein umfassen.

9. Annotationsunterstützungssystem (300) nach einem der Ansprüche 6 bis 8, wobei der Speicher (106) ferner dazu konfiguriert ist, das Inspektionsmodell und die Stücke von Lerndaten zu speichern.

10. Annotationsunterstützungssystem (300) nach einem der Ansprüche 1 bis 9, wobei
dann, wenn die Bilddaten ein Bild der fehlerhaften Schweißnaht (210) umfassen,
die fehlerhafte Schweißnaht (210) auf der Anzeige-/Eingabeeinheit (110) von einem Rahmen umgeben wird und
ein von dem Rahmen umgebener Bereich mindestens in einer Farbe eingefärbt wird, die dem Typ der fehlerhaften Schweißnaht (210) entspricht, oder mit einer Nummer versehen wird, die dem Typ der fehlerhaften Schweißnaht entspricht, um die fehlerhafte Schweißnaht mit dem Typ der fehlerhaften Schweißnaht zu kennzeichnen.

11. Lernunterstützungssystem (100) für ein Schweißnaht-Erscheinungsbild-Inspektionsmodell, wobei das Lernunterstützungssystem (100) mindestens umfasst:
eine Datenerfassungseinheit (101), die dazu konfiguriert ist, Bilddaten der Schweißnaht (201) zu erfassen;
das Annotationsunterstützungssystem (300) nach einem der Ansprüche 1 bis 10;
einen Speicher (106), der dazu konfiguriert ist, mindestens mehrere Stücke von Lerndaten, die auf der Grundlage der Bilddaten, zu denen die Annotation durch das Annotationsunterstützungssystem (300) hinzugefügt wurde, erzeugt werden, und das Erscheinungsbild-Inspektionsmodell zu speichern;
einen Datenteiler (105), der dazu konfiguriert ist, jedes der mehreren Stücke von Lerndaten in Stücke von Lerndaten einer vorbestimmten Größe zu teilen;
den Speicher (106), der dazu konfiguriert ist, die geteilten Stücke von Lerndaten und das Erscheinungsbild-Inspektionsmodell zu speichern;
eine Lerneinheit (107), die dazu konfiguriert ist, ein maschinelles Lernen an dem aus dem Speicher gelesenen Erscheinungsbild-Inspektionsmodell auf der Grundlage der mehreren durch den Datenteiler geteilten Stücke von Lerndaten und der von der Datenerfassungseinheit (101) erfassten und durch den Datenteiler in Stücke von Bilddaten der vorbestimmten Größe geteilten Bilddaten durchzuführen, um eine Vielzahl von gelernten Modellen zu erzeugen; und
eine Bewertungseinheit (108), die dazu konfiguriert ist, die Vielzahl von gelernten Modellen gemäß einem vorbestimmten Bewertungskriterium zu bewerten, um das gelernte Modell mit dem besten Ergebnis unter den gelernten Modellen auszuwählen.

12. Lernunterstützungssystem (100) nach Anspruch 11, wobei
die Bewertungseinheit (108) dazu konfiguriert ist, das Erscheinungsbild-Inspektionsmodell auf das ausgewählte gelernte Modell zu aktualisieren, oder
das Lernunterstützungssystem (100) ferner eine Aktualisierungseinheit (109) umfasst, die dazu konfiguriert ist, das Erscheinungsbild-Inspektionsmodell auf das von der Bewertungseinheit (108) ausgewählte gelernte Modell zu aktualisieren.

13. Lernunterstützungssystem (100) nach Anspruch 11 oder 12, ferner umfassend:
eine Datenaugmentierungseinheit (104), die dazu konfiguriert ist, einen Datenaugmentierungsprozess auf der Grundlage der Bilddaten, zu denen die Annotation hinzugefügt wurde, durchzuführen, um die mehreren Stücke von Lerndaten zu erzeugen.

## Revendications

1. Système d'assistance à l'annotation (300) pour des données d'image utilisées pour l'inspection d'aspect d'une soudure (201), le système d'assistance à l'annotation (300) comprenant au moins :
un annotateur (303) configuré pour ajouter une annotation aux données d'image ;
une unité d'affichage/de saisie (308) configurée pour visualiser et afficher un processus effectué par l'annotateur (303) ; et
une mémoire (106) configurée pour stocker les données d'image auxquelles l'annotation a été ajoutée par l'annotateur (303),
dans lequel
l'annotateur (303) est configuré pour ajouter l'annotation aux données d'image en localisant une soudure défectueuse (210) dans les données d'image et en étiquetant la soudure défectueuse (210) avec un type de la soudure défectueuse,
la mémoire (106) est en outre configurée pour stocker des données d'enseignement dans lesquelles la position et la taille de la soudure défectueuse (210) sont identifiées, et un type de la soudure défectueuse est ajouté à la soudure défectueuse (210) à l'avance,
l'annotation est ajoutée à des données d'image nouvellement acquises sur la base des données d'enseignement,
le système d'assistance à l'annotation (300) comprend en outre :
un diviseur de données (105) qui est configuré pour diviser chacune des données d'image et des données d'enseignement en morceaux d'une taille prédéterminée ; et
une unité d'apprentissage/d'inférence (107) qui est configurée pour définir un modèle d'inspection utilisé pour ajouter l'annotation aux données d'image,
dans lequel l'unité d'apprentissage/d'inférence (107) est configurée pour ajouter l'annotation à des données d'image nouvellement acquises sur la base des données d'enseignement et du modèle d'inspection,
dans lequel l'unité d'apprentissage/d'inférence (107) est configurée pour effectuer un apprentissage automatique sur le modèle d'inspection sur la base des morceaux divisés des données d'image et des données d'enseignement afin de générer une pluralité de modèles appris, et est configurée pour évaluer la pluralité de modèles appris conformément à un critère d'évaluation prédéterminé, et pour mettre à jour le modèle d'inspection vers le modèle appris ayant le meilleur résultat parmi les modèles appris.

2. Système d'assistance à l'annotation (300) selon la revendication 1, comprenant en outre :
un convertisseur de format de données (102) qui est configuré pour convertir un format des données d'image en un format qui peut être traité par l'unité d'apprentissage/d'inférence (107),
dans lequel
lorsque le convertisseur de format de données (102) a converti le format des données d'image, l'annotateur (303) ajoute l'annotation aux données d'image dont le format a été converti.

3. Système d'assistance à l'annotation (300) selon la revendication 1 ou 2, dans lequel les données d'image sont des données de groupe de points dans un espace tridimensionnel.

4. Système d'assistance à l'annotation (300) selon la revendication 3, dans lequel l'unité d'affichage/de saisie (308) est configurée pour pouvoir afficher les données d'image tournées, agrandies ou réduites dans une direction prédéterminée et pour changer un format d'affichage des données d'image afin d'améliorer la visibilité des données d'image.

5. Système d'assistance à l'annotation (300) selon la revendication 3 ou 4, dans lequel l'unité d'affichage/de saisie (308) est configurée pour éclaircir des données à partir des données d'image selon un rapport prédéterminé afin d'afficher les données d'image lorsque les données d'image sont déplacées, tournées, agrandies ou réduites, ou lorsque l'annotation est ajoutée aux données d'image.

6. Système d'assistance à l'annotation (300) selon l'une quelconque des revendications 1 à 5, comprenant en outre :
une unité d'augmentation de données (104) qui est configurée pour effectuer un processus d'augmentation de données sur la base des données d'enseignement afin de générer de multiples morceaux de données d'apprentissage,
dans lequel
l'unité d'apprentissage/d'inférence (107) est configurée pour ajouter une annotation à des données d'image nouvellement acquises sur la base des multiples morceaux de données d'apprentissage divisés.

7. Système d'assistance à l'annotation (300) selon la revendication 6, dans lequel
lorsque les morceaux divisés de données d'image et de données d'apprentissage comprennent une région sans données,
le diviseur de données (105) substitue, pour la région sans données, une valeur minimale des morceaux divisés de données d'image et de données d'apprentissage, ou une valeur de données d'une région la plus proche de la région sans données.

8. Système d'assistance à l'annotation (300) selon la revendication 6 ou 7, dans lequel
lorsque l'unité d'apprentissage/d'inférence (107) déduit que la soudure défectueuse existe dans une région sans la soudure (201) dans les données d'image,
l'unité d'apprentissage/d'inférence (107) ne reflète pas le résultat d'inférence dans les données d'image ou change la taille et la position de la soudure défectueuse (210) dans les données d'image de sorte que les données d'image comprennent la soudure (201) seule.

9. Système d'assistance à l'annotation (300) selon l'une quelconque des revendications 6 à 8, dans lequel la mémoire (106) est en outre configurée pour stocker le modèle d'inspection et les morceaux de données d'apprentissage.

10. Système d'assistance à l'annotation (300) selon l'une quelconque des revendications 1 à 9, dans lequel lorsque les données d'image comprennent une image de la soudure défectueuse (210),
la soudure défectueuse (210) est entourée par un cadre sur l'unité d'affichage/de saisie (110), et
une région entourée par le cadre est au moins peinte d'une couleur correspondant au type de la soudure défectueuse (210) ou assignée d'un numéro correspondant au type de la soudure défectueuse pour étiqueter la soudure défectueuse avec le type de la soudure défectueuse.

11. Système d'assistance à l'apprentissage (100) pour un modèle d'inspection d'aspect de soudure, le système d'assistance à l'apprentissage (100) comprenant au moins :
une unité d'acquisition de données (101) qui est configurée pour acquérir des données d'image de la soudure (201) ;
le système d'assistance à l'annotation (300) selon l'une quelconque des revendications 1 à 10 ;
une mémoire (106) qui est configurée pour stocker au moins de multiples morceaux de données d'apprentissage générés sur la base des données d'image auxquelles l'annotation a été ajoutée par le système d'assistance à l'annotation (300) et le modèle d'inspection d'aspect ;
un diviseur de données (105) qui est configuré pour diviser chacun des multiples morceaux de données d'apprentissage en morceaux de données d'apprentissage d'une taille prédéterminée ;
la mémoire (106) configurée pour stocker les morceaux divisés de données d'apprentissage et le modèle d'inspection d'aspect ;
une unité d'apprentissage (107) qui est configurée pour effectuer un apprentissage automatique sur le modèle d'inspection d'aspect lu depuis la mémoire sur la base des multiples morceaux de données d'apprentissage divisés par le diviseur de données et des données d'image acquises depuis l'unité d'acquisition de données (101) et divisées en morceaux de données d'image de la taille prédéterminée par le diviseur de données afin de générer une pluralité de modèles appris ; et
une unité d'évaluation (108) qui est configurée pour évaluer la pluralité de modèles appris conformément à un critère d'évaluation prédéterminé afin de sélectionner le modèle appris ayant le meilleur résultat parmi les modèles appris.

12. Système d'assistance à l'apprentissage (100) selon la revendication 11, dans lequel
l'unité d'évaluation (108) est configurée pour mettre à jour le modèle d'inspection d'aspect vers le modèle appris sélectionné, ou
le système d'assistance à l'apprentissage (100) comprend en outre une unité de mise à jour (109) qui est configurée pour mettre à jour le modèle d'inspection d'aspect vers le modèle appris sélectionné par l'unité d'évaluation (108).

13. Système d'assistance à l'apprentissage (100) selon la revendication 11 ou 12, comprenant en outre :
une unité d'augmentation de données (104) qui est configurée pour effectuer un processus d'augmentation de données sur la base des données d'image auxquelles l'annotation a été ajoutée afin de générer les multiples morceaux de données d'apprentissage.
